# EUROPEAN PATENT APPLICATION

(11) **EP 3 591 012 A1**
(43) Date of publication of application: **08.01.2020**
(21) Application number: 18182074.7
(22) Date of filing: 05.07.2018
(51) Int. Cl.: C09D 11/037, C09D 11/322, C09D 11/324, C09D 11/52, G06K 19/00

(54) **CONDUCTIVE INK FOR USE IN MANUFACTURING RADIO FREQUENCY IDENTIFICATION (RFID) TAG ANTENNA AND METHOD FOR MANUFACTURING RFID TAG ANTENNA**

(71) Applicant: Lai, Chung-Ping, Zhubei City, Hsinchu County 302 (TW)
(72) Inventor: Lai, Chung-Ping, Zhubei City, Hsinchu County 302 (TW)
(74) Representative: Cabinet Chaillot

(57) **Abstract**

A conductive ink for use in manufacturing RFID tag antennas and a method for manufacturing the RFID tag antennas are revealed. The conductive ink includes sheet-like carbon material containing graphite structure, conductive filler, dispersant, and solvent. The conductive ink is coated on a surface of a fibrous substrate by printing or inkjet printing according to the shape of the antenna so as to form a conductive layer. A part of the conductive layer is infiltrated into pores between fibers of the fibrous substrate and attached to the fibrous substrate. The fibrous substrate together with the conductive layer forms a RFID antenna without non-conductive binder. The conductive ink is binder free so that the electrical conductivity of the antenna is improved while the electrical resistance and the production cost of the antenna are reduced

## Description

### BACKGROUND OF THE INVENTION

### Field of the Invention

The present invention relates to Radio Frequency Identification (RFID) technology, especially to a conductive ink for use in manufacturing RFID tag antennas and a method for manufacturing the RFID tag antennas.

### Description of Related Art

An RFID system consists of a reader and RFID tags. The RFID tag contains an integrated circuit (IC) chip and an antenna. A common RFID tag is a passive tag powered up by the reader. The electromagnetic waves from the reader induce current in the antenna, which is used to power the IC chip. Then the IC chip transmits information stored in advance to the reader to obtain the identification. The RFID tags available now operate at different frequency ranges: low frequency band (LF, 125 KHz to 134.2 KHz), high frequency band (HF, 13.56MHz), ultra high frequency band (UHF, 868 MHz to 956M Hz) and microwave frequency band (Microwave, 2.45G Hz). In general, the higher frequency RFID tags have greater operating range and faster speed.

The RFID performance depends on the conversion efficiency of the antenna while the conversion efficiency from electromagnetic waves to currents is determined by pattern design and conductivity of the antenna. The antenna of the RFID tag is created by etching of a thin copper/aluminum foil or screen printing. The antenna made by copper/aluminum etching has the advantages of low resistance, high accuracy and good performance. But the etching has the shortcomings of complicated process, long production time, high cost, constrained substrate choices, and use of high pollution etchants and cleaners. Screen printing is a fast and low-cost way to produce antennas with conductive ink. The conductive ink is printed on a substrate directly so that there is less contaminations and more substrate materials can be used. But the electronic properties of the antennas created using screen printing are poor than those of the antennas created by etching. For example, the resistance is not stable, the conductivity is low and the adhesion is poor. The benefits and the popularity of the antenna created by screen printing are affected by cost and performance of the conductive ink. Now metals are the main conductive materials in the conductive ink. The most common metal used in the conductive ink includes copper and silver. The drawback of the copper is that it is easily oxidized and the silver is relatively expensive. The performance and cost of the conductive ink are significantly affected by the metals contained therein. The adhesion of metal thin films is also a dilemma. The metals are unable to form a thin film on the substrate directly so that binders/adhesives are required for adhesion of the metal film. Most of the binders/adhesives added into the conductive ink are non-conductive so that the addition of the binders/adhesives has a negative effect on the conductivity of the conductive ink. Thus a balance between the adhesion and the electrical resistivity is difficult to achieve.

Refer to US Pub. No. 2012/0277360 A1, the graphene compositions include at least one polymer binder. The compositions may optionally contain additional electrically conductive components such as metals, metal oxides, etc. The surface resistivity of the compositions is 0.001-500 ohm/sq.

Refer to US Pub. No. 2004/0175515A1, a conductive ink having a conductive flake material can be printed by flexographic or gravure printing to provide sufficient conductivity for RFID tag antenna. The binder can be polymers and resins. The conductive materials mainly include carbon black, metal and metal oxide. The sheet resistance is poor, about 200 ohms per square. Refer to US Pat. No. 7017822, an antenna is made from conductive materials (metal) in a base resin host. The antenna is molded to a substrate or attached to the substrate by resin. The conductive materials are formed from metals such as stainless steel. The user of carbons creates a micron filler element. The resistivity ranges from 5 to 25 ohms per square. Refer to Taiwanese Pat. No. 1434456, a method for manufacturing RFID antenna on non-woven slag fiber paper is revealed. After the antenna being printed by using ink containing metal ions, the metal ions are reduced in electroless plating. The substrate is limited to the non-woven slag fiber paper. The manufacturing process is complicated and the main conductive materials are still metals. As to the Chinese Pub. No. 101921505B, a conductive ink for use in RFID systems is disclosed. The conductive ink uses a mixture of silver nanowires and silver nanoparticles as conductive filler. The conductive ink also includes at least 2-10% epoxy resin. The high cost of the silver nanowires increases production cost of the conductive ink.

Refer to Chinese Pub. No. CN103436099, it discloses a composite conductive ink containing silver powder, graphene sheet and graphite nanoplatelets. The silver powder is the main electrically conductive material of the conductive ink. The conductive ink further includes 5-30% (weight percent) film-forming resin. As shown in table 1, other patents related to the conductive ink containing graphene all include a certain amount of polymer binder. Although the polymer binder remarkably improves adhesion of the printed conductive layer, the polymer binder also affects conductivity of the overall printed layer. Thus there is room for improvement and there is a need to provide a conductive ink without polymer binder for use in manufacturing RFID tag antennas.

**Table 1: Formula of graphene conductive ink revealed by different patents**

| Patent # | Solid composition | | | | |
|---|---|---|---|---|---|
| | graphene (g) | Other fillers (g) | resin binder or polymer mixture (g) | dispersant& additive (g) | total solid (g) |
| CN 102964972 B | 2.4 | 37.6 | 80 | 10.4 | 130.4 |
| | 1.8% | 28.8% | 61.3% | 8.0% | 100.0% |
| CN 103059636A | 10 | 60 | 25 | 36 | 131 |
| | 7.6% | 45.8% | 19.1% | 27.5% | 100.0% |
| CN 103214897B | 2.8 | 15 | 35 | 3 | 55.8 |
| | 5.0% | 26.9% | 62.7% | 5.4% | 100.0% |
| CN 103468101A | 10 | 15 | 80 | 30 | 135 |
| | 7.4% | 11.1% | 59.3% | 22.2% | 100.0% |
| CN103627223A | 7.1 | 5 | 125 | 5 | 142.1 |
| | 5.0% | 3.5% | 88.0% | 3.5% | 100.0% |
| CN 104109450A | 10 | 80 | 140 | 10 | 240 |
| | 4.2% | 33.3% | 58.3% | 4.2% | 100.0% |
| US 2010/0000441 A1 | - | - | - | - | - |
| | 5.0% | 0.0% | 95.0% | 0.0% | 100.0% |

### SUMMARY OF THE INVENTION

Therefore it is a primary object of the present invention to provide a conductive ink for use in manufacturing radio frequency identification (RFID) tag antennas, which is not only used in creating antennas by printing, but also solving the above problems of the conductive ink available now.

In order to achieve the above object, the conductive ink according to the present invention includes at least one sheet-like carbon material containing graphite structure, at least one conductive filler, at least one dispersant and at least one solvent.

A method for manufacturing RFID tag antennas according to the present invention includes a plurality of steps. First prepare a porous fibrous substrate. Then prepare a conductive ink that includes at least one sheet-like carbon material containing graphite structure, at least one conductive filler, at least one dispersant, and at least one solvent. Next print the conductive ink on a surface of the porous fibrous substrate. Then dry and cure the conductive ink printed on the porous fibrous substrate to form a printed antenna.

The present method further include a step of rolling the cured printed antenna. Preferably, the step of rolling is for compressing the conductive layer on the surface of the porous fibrous substrate into 50% to 90% of the original thickness.

Preferably, the conductive filler includes conductive carbon materials in all shapes except the sheet-like conductive carbon material, conductive metal particles, conductive oxides, and conductive polymers.

Preferably, the conductive carbon materials in shapes other than the sheet include graphene, graphite, carbon nanotubes, carbon nanocapsules, conductive carbon black and a combination thereof.

Preferably, the conductive metal particles include platinum, gold, palladium, ruthenium, silver, copper, nickel, zinc, a combination thereof, and an alloy.

Preferably, the conductive oxides include palladium (IV) *oxide,* Ruthenium (IV) oxdie, and a combination thereof.

Preferably, the conductive polymers include polythiophenes (PTs), polypyrroles (PPys), polyacetylene (PA), polyaniline derivatives, or a combination thereof.

In the conductive ink with sheet-like carbon material therein, the sheet-like carbon material is stacked to form an irregular and loose structure. Without polymer binders, the conductive ink containing the sheet-lie carbon material (a kind of conductive paste) is able to be processed by rolling to make the loose sheet-like structure become compact. The sheet-like carbon materials are tightly connected by Van der Waals force between surface molecular layers thereof. Compared with the conventional conductive paste containing polymer binders, the coating with lower resistance is obtained by the rolled conductive carbon layer without non-conductive polymer binder therein. The sheet-like carbon material is not only used as the conductive filler mentioned above, but also used as conductive adhesive material for binding other conductive fillers in the present invention after being coated and rolled to form a compact layer. In the present invention, other conductive filler/fillers is/are added into the conductive ink without polymer binder and then dispersed in network structure formed by loosely stacked sheet-like carbon material. Next the network structure formed by the sheet-like carbon material becomes more dense and compact after being treated by a rolling process and other conductive fillers are tightly bound by the sheet-like carbon material. Thus a conductive layer without polymer binder is formed. The above RFID tag antennas are further produced by the conductive layer without polymer binder.

Without the non-conductive binder, the electric conductivity of the conductive ink for use in RFID tag antennas according to the present invention is improved. The antennas produced by coating the conductive ink on the surface of the porous fibrous substrate have a lower electrical resistance and reduced production cost. The conductive paste produced by the conductive ink is used in combination with the porous fibrous substrate while compactness and electrical conductivity of the conductive layer can be further improved by the rolling process.

### BRIEF DESCRIPTION OF THE DRAWINGS

The structure and the technical means adopted by the present invention to achieve the above and other objects can be best understood by referring to the following detailed description of the preferred embodiments and the accompanying drawings, wherein:
Fig. 1 is a sectional view of a RFID tag antenna of an embodiment according to the present invention;
Fig. 2 is a schematic drawing showing microstructure of a film formed by sheet-like conductive carbon material and a porous fibrous substrate in the embodiment of Fig. 1 at the position II according to the present invention;
Fig. 3 is a flow chart showing steps of a method for manufacturing RFID tag antennas of an embodiment according to the present invention;
Fig. 4 is a schematic drawing showing structure of a RFID tag antenna of an embodiment according to the present invention;
Fig. 5 is a graph showing return loss of RFID tag antennas at different frequencies of an embodiment according to the present invention.

### DETAILED DESCRIPTION OF THE PREFERRED EMBODIMENT

In the following embodiments and/or implementations, the same or corresponding components in the figures are represented by the same or corresponding reference number.

A conductive ink for use in manufacturing of RFID tag antennas according to the present invention includes sheet-like conductive carbon material containing graphite structure, at least one conductive filler, at least one dispersant and at least one solvent. The solids content of the conductive ink is ranging from 2% to 85% (percentage by weight, wt%). The sheet-like conductive carbon material is in the powder form and is ranging from 10% to 90% (wt%) of the total solid weight. The sheet-like conductive carbon material includes graphene, graphite platelets, natural graphite, pelleted carbon black, such as KS6. The conductive filler is ranging from 10% to 90% (wt%) of the total solid weight, and is selected from the group consisting of conductive carbon materials in all shapes except the sheet, conductive metal particles, conductive oxides, conductive polymers, and a combination thereof. The conductive carbon materials in shapes other than sheet is selected from the group consisting of graphene, graphite, carbon nanotubes, carbon nanocapsules, conductive carbon black and a combination thereof. The conductive metal particles include platinum, gold, palladium, ruthenium, silver, copper, nickel, zinc, a combination thereof, and an alloy. The conductive oxides include palladium (IV) oxide, ruthenium (IV) oxdie, and a combination thereof. The conductive polymers include polythiophenes (PTs), polypyrroles (PPys), polyacetylene (PA), polyaniline derivatives, or a combination thereof. The dispersant is ranging from 0.0001% to 10% (wt%) of the total solid weight and divided into two groups, ionic dispersants and nonionic dispersants. The ionic dispersants include P-123, Tween 20, Xanthan gum, Carboxymethyl Cellulose (CMC), Triton X-100, Polyvinylpyrrolidone (PVP), Brji 30 and a combination thereof while the nonionic dispersants include Poly(sodium 4-styrenesulfonate) (PSS), 3-[(3-Cholamidopropyl)dimethyl ammonio]-1-propanesufonate (CHAPS), Hexadecyltrimethylammonium bromide (HTAB), Sodium taurodeoxycholate hydrate (SDS), 1-Pyrenebutyric acid (PBA), and a combination thereof.

The solvent can be pure water or organic solvent. The organic solvent includes N-Methyl-2-pyrrolidone (NMP), IPA (Isopropyl alcohol), ethanol, glycerol, ethylene glycol, butanol, propanol, Propylene glycol monomethyl ether (PGME), and Propylene glycol monomethyl ether acetate (PGMEA).

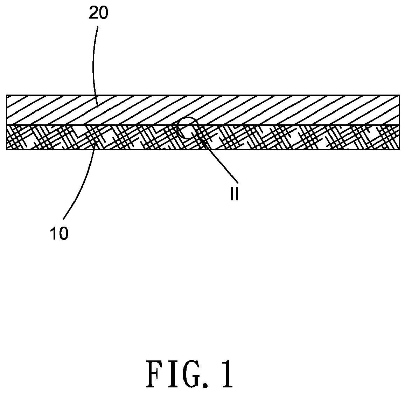

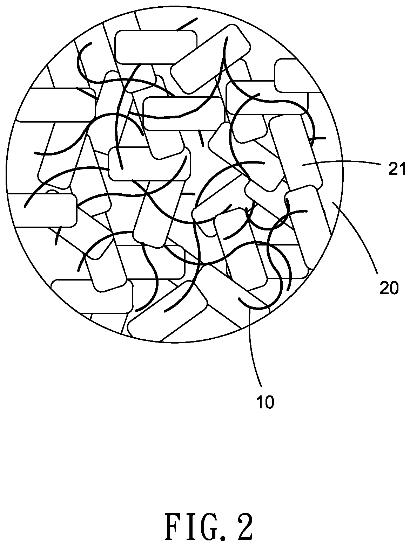

Refer to Fig.1 and Fig. 2, a RFID tag antenna according to the present invention includes a porous fibrous material 10 and a conductive layer 20. The conductive layer 20 is composed of at least one sheet-like conductive carbon material containing graphite structure, at least one conductive filler, and at least one dispersant. The sheet-like conductive carbon material is ranging from 10% to 90% (wt%) of the total solid weight. The conductive filler is ranging from 10% to 90% (wt%) of the total solid weight. As to the dispersant, it is only ranging from 0.0001% to 10% (wt%) of the total solid weight.

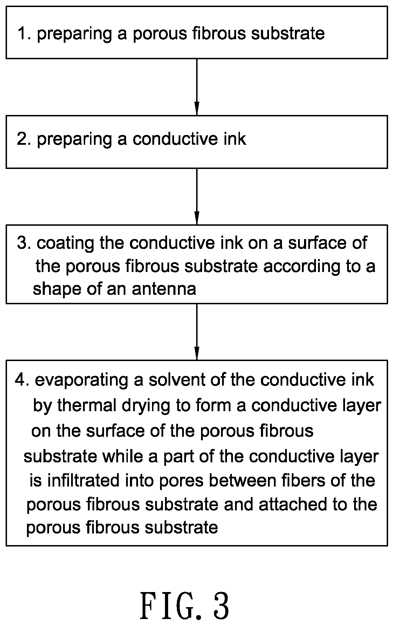

Refer to Fig. 3, a method for manufacturing RFID tag antennas according to the present invention includes a plurality of steps.
1. preparing a porous fibrous substrate 10. The materials for the porous fibrous substrate 10 include general paper, hemp paper and polyethylene terephthalate (PET).
2. preparing a conductive ink composite without polymer binders. The conductive ink includes sheet-like conductive carbon material containing graphite structure, at least one conductive filler, at least one dispersant, and at least one solvent. The sheet-like conductive carbon material is ranging from 10% to 90% (wt%) of the total solid weight. The conductive filler is ranging from 10% to 90% (wt%) of the total solid weight. The dispersant is ranging from 0.0001% to 10% (wt%) of the total solid weight. The solids content of the conductive ink is ranging from 2% to 85% (wt%).
3. coating the conductive ink on a surface of the porous fibrous substrate 10 according to a shape of the antenna. The conductive ink is coated by printing (including screen printing, relief printing, and gravure printing) or inkjet printing.
4. evaporating the solvent of the conductive ink by thermal drying to form a conductive layer 20 on the surface of the porous fibrous substrate 10 while a part of the conductive layer 20 is infiltrated into pores between fibers of the porous fibrous substrate 10 and attached to the porous fibrous substrate 10.
5. rolling the conductive layer 20 on the surface of the porous fibrous substrate 10 after the step of drying and curing. The thickness compression ratio is ranging from 50% to 90% of the original total thickness of the porous fibrous substrate 10 and the conductive layer 20 (the printed antennas).

As to the conductive paste that contains polymer resin (binder), a conductive layer with good adherence is obtained after curing due to conductive filler held tightly by the shrunk and cured resin. Refer to the following table 2, the present binder-free graphene/metal composite conductive paste is compared with commercial conductive silver paste with epoxy resin. In the conductive layer produced by the commercial conductive silver paste with epoxy resin, the conductive filler originally held tightly by the polymer binder becomes loose while being squeezed and pressed during the rolling process. The binder/adhesive material is also squeezed and dispersed in the conductive filler to break original conductive paths. Thus the electrical resistance between two ends of the printed antenna is increased from 2.1 ohm (Ω) to 2.5 ohm (Ω). The resistance is increased 19% after the rolling process. Moreover, the polymer resin may be attached to the roller when too much rolling force is applied. A part of the printed antenna may be released from the substrate and attached to the roller. Thus the conductive paste with polymer binder will not be treated by the rolling process after being printed and cured. As to the present conductive ink, it is prepared in the form of a conductive paste, especially a conductive paste without polymer binder. The molecules of the conductive filler are in contact with each other more closely by the rolling process. Without the non-conductive polymer binder therein, the resistance between the ends of the printed antenna is dramatically reduced (from 1.8 ohm to 0.9 ohm). The resistance is decreased up to 50% after the rolling. The adherence of the whole conductive layer is stabilized by the sheet-like carbon material after the rolling process. In addition, the adhesion of polymer resin to the roller caused by too much force applied will not occur.

**Table 2 resistance of commercial conductive silver paste with epoxy resin/conductive paste without polymer binder before and after rolling**

| item | resistance between ends of the antenna (Ohm) | | rate of change |
|---|---|---|---|
| | before rolling | after rolling | |
| conductive silver paste with epoxy resin | 2.1 | 2.5 | +19% |
| conductive paste without polymer binder | 1.8 | 0.9 | -50% |

According to the shape of the antenna, the conductive ink mentioned above is coated on the surface of porous fibrous material 10 by printing or inkjet printing. A part of the conductive ink is infiltrated into fibers of the porous fibrous substrate 10. Owing to good film-forming ability of the sheet-like conductive carbon material 21 contained in the conductive ink, the sheet-like conductive carbon material 21 forms the film together with the porous fibrous substrate 10 without addition of the adhesives, as shown in Fig. 2. The sheet-like conductive carbon material 21 and the porous fibrous substrate 10 form a RFID tag antenna containing no metal and no adhesive. Without the non-conductive binder in the conductive ink, the antenna has higher electric conductivity, lowered electrical resistance and reduced production cost.

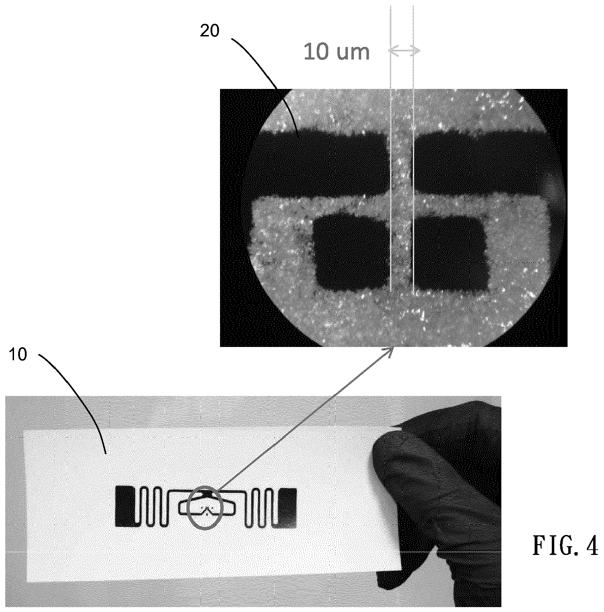

The mesh count is ranging from 100 to 400 with the printing accuracy of 100µm when the conductive ink is coated on the surface of the porous fibrous substrate 10 by screen printing. Once the conductive ink is coated on the surface of the porous fibrous substrate 10 by inkjet printing, the optimal printing accuracy can even reach the level of 0.1um depending on positioning accuracy of the inkjet printing device. Refer to Fig. 4, a schematic drawing showing structure of a RFID tag antenna created by printing of the present conductive ink. The appearance of the conductive layer 20 produced by printing of the present conductive ink looks the same as that of the conductive layer produced by etching of the aluminum foil. The accuracy of the contacts between the conductive layer 20 and the IC chip can reach the level of 10um without a short circuit (as shown in the partial enlarged view of Fig. 4). In a further embodiment of the present invention, the conductive ink can be directly printed on paper for preparation of RFID tags that is easily removed. Compared with the complicated process of the conventional metal etching and patterning, the method of the present invention simplifies the process significantly.

In a further embodiment, materials for the porous fibrous substrate 10 can be materials with higher fiber density and more capillary holes. For example, the material can be paper with metric weight of 30-200 g/m2, a density of 0.5-2.5, and an average pore size of .02-500 µm.

After the printing of the conductive layer 20, a drying step is carried out to evaporate solvent in the conductive ink. The drying is performed by heat drying and the heating temperature is up to 50-300 °C. The higher the heating temperature, the shorter the drying time. In an embodiment of the present invention, the method further includes a rolling step. After the drying, the conductive layer 20 attached on the surface of the porous fibrous substrate 10 is treated by the rolling step to be compressed into 50-90% of the original thickness. Thus the conductive layer 20 has higher compactness and higher conductivity. The reduction of the resistance can be achieved by coating of the thicker conductive layer 20 or improvement of the compactness of the conductivity layer 20. Therefore the sheet-like conductive carbon material with higher thickness and larger particle size can be selected and used. The sheet-like conductive carbon material applied to the RFID tag has a resistance of 0.1-50 ohm/sq (resistivity of 1×10⁻⁶-2.5×10⁻⁴ ohm-metre (Ω·m)).

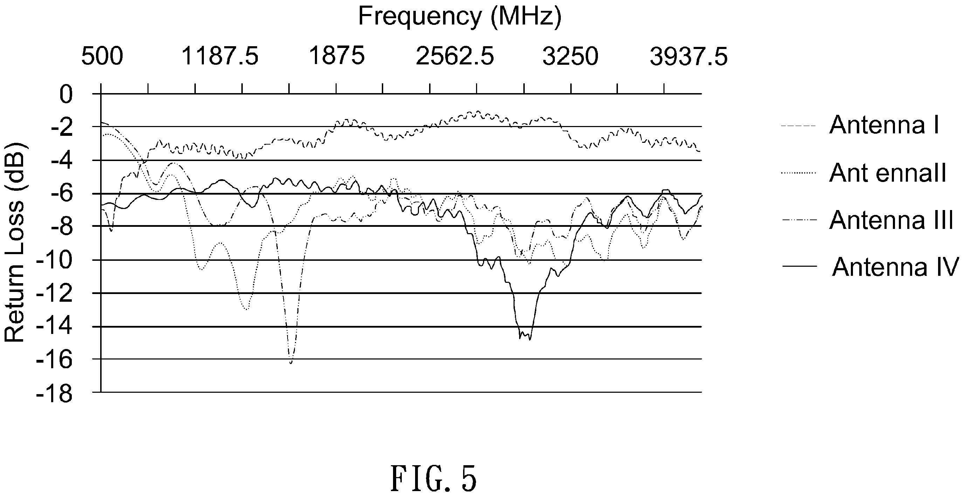

Refer to Fig. 5, a graph showing return loss of RFID tag antennas at different frequencies is revealed. The present conductive ink without polymer binder for use in preparing RFID tag antennas is printed on the surface of the porous fibrous substrate 10 to form different antenna patterns and then the return loss of the respective antenna is shown in Fig. 5. It is learned that different antennas have better performance at specific frequency bands. Thus the antennas are able to be applied to RFID tags that operate in specific frequency bands. The antennas prepared by the present conductive ink printed on the surface of the porous fibrous substrate 10 have better return loss in Ultra High Frequency (UHF) band and Microwave frequency band.

The RFID tag antenna of the present invention is electrically connected to the IC chip and is tested by RFID readers. The antenna pattern of the antenna tested is common for ultra-high frequency (UHF) band. One is a simple linear antenna and the other is a more complicated antenna with a plurality of curves. The sheet resistance and reading test results of the two antennas are shown in the following table 3. The test results have proved that the RFID tag antennas manufactured by the present binder-free conductive ink being printed on the surface of the porous fibrous substrate 10 can be applied to HF tags that operate at 13.56MHz, UHF tags that operate at 868-956MHz and Microwave tags that operate at 2.45G Hz.

**Table 3 shows results of reading test of RFID tag antenna connected to the IC chip**

| | antenna pattern | antenna frequency | sheet resistance (ohm/sq) | reading test result obtained by RFID reader |
|---|---|---|---|---|
| sample 1 | linear | UHF | 8.38 | readable |
| sample 2 | curved | UHF | 5.34 | readable |

Additional advantages and modifications will readily occur to those skilled in the art. Therefore, the invention in its broader aspects is not limited to the specific details, and representative devices shown and described herein. Accordingly, various modifications may be made without departing from the spirit or scope of the general inventive concept as defined by the appended claims and their equivalent.

## Claims

1. A conductive ink for use in manufacturing RFID tag antennas comprising:
at least one sheet-like carbon material containing graphite structure,
at least one conductive filler,
at least one dispersant, and
at least one solvent.

2. The conductive ink as claimed in claim 1, wherein the sheet-like conductive carbon material is selected from the group consisting of graphene, graphite platelets, natural graphite, pelleted carbon black, and a combination thereof.

3. The conductive ink as claimed in claim 1, wherein the conductive filler is selected from the group consisting of conductive carbon material in shapes other than the sheet, conductive metal particle, conductive oxide, conductive polymer, and a combination thereof.

4. The conductive ink as claimed in claim 3, wherein the conductive carbon material in shapes other than the sheet is selected from the group consisting of graphene, graphite, carbon nanotubes, carbon nanocapsules, conductive carbon black and a combination thereof.

5. The conductive ink as claimed in claim 3, wherein the conductive metal particle is selected from the group consisting of platinum, gold, palladium, ruthenium, silver, copper, nickel, zinc, a combination thereof, and an alloy.

6. The conductive ink as claimed in claim 3, wherein the conductive oxide is selected from the group consisting of palladium (IV) *oxide,* Ruthenium (IV) oxdie, and a combination thereof.

7. The conductive ink as claimed in claim 3, wherein the conductive polymer is selected from the group consisting of polythiophenes (PTs), polypyrroles (PPys), polyacetylene (PA), polyaniline derivatives, and a combination thereof.

8. A method for manufacturing RFID tag antennas comprising the steps of:
(1) preparing a porous fibrous substrate;
(2) preparing a conductive ink that includes at least one sheet-like carbon material containing graphite structure, at least one conductive filler, at least one dispersant, and at least one solvent;
(3) printing the conductive ink on a surface of the porous fibrous substrate;
(4) drying and curing the conductive ink printed on the porous fibrous substrate to form a printed antenna;
(5) rolling the cured printed antenna.

9. The method as claimed in claim 8, wherein in the step of rolling the cured printed antenna after the step of drying and curing, a thickness compression ratio of the printed antenna on the surface of the porous fibrous substrate is ranging from 50% to 90% of the original total thickness of the porous fibrous substrate and the printed antenna.

10. The method as claimed in claim 8, wherein the sheet-like conductive carbon material is selected from the group consisting of graphene, graphite platelets, natural graphite, pelleted carbon black, and a combination thereof.

11. The method as claimed in claim 8, wherein the conductive filler is selected from the group consisting of conductive carbon material in shapes other than the sheet, conductive metal particle, conductive oxide, conductive polymer, and a combination thereof.

12. The method as claimed in claim 11, wherein the conductive carbon material in shapes other than the sheet is selected from the group consisting of graphene, graphite, carbon nanotubes, carbon nanocapsules, conductive carbon black and a combination thereof.

13. The method as claimed in claim 11, wherein the conductive metal particle is selected from the group consisting of platinum, gold, palladium, ruthenium, silver, copper, nickel, zinc, a combination thereof, and an alloy.

14. The method as claimed in claim 11, wherein the conductive oxide is selected from the group consisting of palladium (IV) *oxide,* Ruthenium (IV) oxdie, and a combination thereof.

15. The method as claimed in claim 11, wherein the conductive polymer is selected from the group consisting of polythiophenes (PTs), polypyrroles (PPys), polyacetylene (PA), polyaniline derivatives, and a combination thereof.
